# EUROPEAN PATENT APPLICATION

(11) **EP 2 466 447 A2**
(43) Date of publication of application: **20.06.2012**
(21) Application number: 11009948.8
(22) Date of filing: 19.12.2011
(51) Int. Cl.: G06F 3/06

(54) **Method for converting data in optical disc drive**

(30) Priority: 17.12.2010 KR 20100129645
(71) Applicant: Hitachi-LG Data Storage Korea, Inc., Geumcheon-gu Seoul 153-803 (KR)
(72) Inventor: Lim, Youdoo, Geumcheon-gu Seoul, 153-803 (KR)
(74) Representative: Katérle, Axel

(57) **Abstract**

The present invention relates to a method for converting data in an optical disc drive. In one embodiment of the present invention, data corresponding to a first file system are generated based on file system information collected with respect to data recorded in an optical disc, the generated data are stored in a memory, while first data converted according to the first file system for directories and files recorded in the optical disc, second data for the directories, and third data for the files being stored in the memory separately from each other; information requested from a host is processed based on at least part of the separately stored data and the information is sent to the host. Therefore, an optical disc drive can be used for an AV device with an USB input. Also, data requested by a host are searched quickly and sent to the host.

## Description

### CROSS-REFERENCE TO RELATED APPLICATION

This application claims priority to Korean Patent Application No. 10-2010-0129645 filed on December 17, 2010, the contents of which are herein incorporated by reference in its entirety.

### BACKGROUND

### 1. Technical Field

The present invention relates to a method for converting data in an optical disc drive. More specifically, the present invention relates to an optical disc drive allowing use for AV devices in addition to PC.

### 2. Discussion of the Related Art

Optical discs such as CD (Compact Disc), DVD (Digital Versatile Disc), and BD (Blu-ray Disc) are easy to carry; capable of being loaded and unloaded; and capable of recording and storing a large amount of data. Thanks to these features, optical disc drives capable of playing or recording optical discs are widely used for peripheral devices of desktop computers or laptop computers.

Nowadays, as desktop computers are getting slimmer and thickness of laptop computers smaller, external optical disc drives are getting more popular rather than built-in optical disc drives; in this case, a single external optical disc drive can be shared among several computers as a common peripheral device.

Optical disc drives have been used commonly for a peripheral device of computer. When an optical disc drive is used as a built-in device, it is connected through E-IDE (Enhanced-Integrated Drive Electronics), PATA (Parallel Advanced Technology Attachment), or SATA (Serial ATA); on the other hand, when it is used as an external device, it is connected to a computer through USB (Universal Serial Bus) or SCSI (Small Computer System Interface).

To extend the range of choice for video or audio sources, TVs or various types of AV devices of today provide a function of retrieving and playing data stored in a flash memory device such as a SD card and a memory stick or an external hard disc through USB interface.

AV devices do not support a file system such as ISO9660/UDF (Universal Disk Format) which is widely employed for discs such as CD, DVD, and BD; due to this reason, even if an optical disc drive is connected to an AV device or a portable device, recognition or play of media contents is not supported. An exception is DVD-RAM; media recognition and play is allowed since DVD-RAM supports a FAT32 file system, which is because an AV device supports FAT32 file system. However, since DVD-RAM is not a media widely adopted for ordinary users, use of DVD-RAM still causes inconvenience for users.

Therefore, requirements are raised to improve user convenience by allowing an external optical disc drive equipped with an interface for connecting to an AV device to be connected to the AV device; and allowing widely used media such as CD/DVD to be recognized and played.

### SUMMARY

The present invention has been made to solve the problem described above. One objective of the present invention is to provide an optical disc drive which can be used for devices equipped with USB input.

Another objective of the present invention is to provide a method for changing a file system of an optical disc in order for an AV device connected to an optical disc drive to access data stored in the optical disc.

To achieve the objective above, a method for converting data in an optical disc drive according to one embodiment of the present invention comprises generating data corresponding to a first file system based on file system information collected with respect to data recorded in an optical disc and storing the generated data in a memory, first data converted according to the first file system for directories and files recorded in the optical disc, second data for the directories, and third data for the files being stored in the memory separately from each other; processing information requested from a host based on at least part of the separately stored data and sending the processed information to the host.

An optical disc drive according to another embodiment of the present invention comprises a loader for reading out data from an optical disc or recording data in an optical disc; an interface to be connected to a host; memory for storing data; and a controller configured to collect file system information about data recorded in an optical disc through the loader, to generate data corresponding to a first file system based on the collected information, to store the generated data in the memory, while storing first data converted according to the first file system for directories and files recorded in the optical disc, second data for the directories, and third data for the files in the memory separately from each other and based on at least part of the separately stored data, to process information requested from the host based on at least part of the separately stored data and to control the interface to send the processed information to the host.

In one embodiment, the sending step can check the information requested by the host based on an address included in a command received from the host.

In one embodiment, the first data can include at least one or more from among start address, size, name, property, length of the name, and time information for each file or directory.

In one embodiment, if no space is available in the area where the first data are stored, data for a parent directory and data for itself directory are generated for the directory not converted into the first data; and the generated data are stored in a preliminary area of the memory.

In one embodiment, the second data can include position from which converted data for each directory start within an area where the converted first data are stored.

In one embodiment, the third data can include start position and size information of actual data of each file. At this time, the third data can be arranged in terms of the start position. Also, the start position of the actual data can be expressed by a sum of an original start address recorded in the disc and size of file system information generated during conversion into the first file system for the data recorded in the disc.

In one embodiment, file system of the optical disc is UDF and for a file keeping an allocation description in a file entry and being of zero size, start position and size information of actual data of the corresponding file can be recorded as the third data.

In one embodiment, the sending step, upon request of information about a root or a directory from the host, can send requested data selectively from the first data with reference to the second data.

In one embodiment, the sending step, upon request of information about arranged addresses for file data or directory data from the host, can generate requested information based on the first to third data and send the generated information.

In one embodiment, the sending step, upon request of MBR or a boot sector of FAT32 from the host, independently of a file system of data recorded in the optical disc, can generate the MBR or the boot sector and send the generated MBR or boot sector. At this time, information related to recording capacity of a disc to be included in the MBR or the boot sector can be obtained from disc information or physical format information read out from a lead-in area of the optical disc.

In one embodiment, part of the file system information collected to generate data corresponding to the first file system can be managed through a queue. At this time, directory information or file entry information from among the collected file system information is stored in a queue; and information stored in the queue can be processed in an order of storing in the queue.

In one embodiment, if file system of the optical disc is UDF, for a file entry where type of allocation descriptor is immediate, start position of the corresponding file can be stored separately in the memory as fourth data. At this time, the sending step, upon request of data for an address included in the fourth data from the host, can include reading out requested actual data from a sector indicated by the address, padding zeros in the read actual data and reconfiguring the zero-padded data in units of sectors to transfer.

In one embodiment, the sending step, if "Get Descriptor Configuration Command" is sent from the host, can set a value of "Subclass code" field of report data to be "0x06" and thus sends the data to the host.

In one embodiment, file system of the optical disc is ISO9660 or UDF and the first file system is FAT32.

A method for processing data of an audio CD in an optical disc drive according to yet another embodiment comprises, based on a number of tracks recorded in the audio CD and start address and size information of each track, generating data corresponding to a first file for file structure along which as many wave files as the number of tracks are stored; if a predetermined file from among the wave files is requested to play from a host receiving data generated according to the first file system, generating header information of the corresponding file and reading out track data for the corresponding file and storing the track data in the memory temporarily; and configuring the header information and track data in units of sectors and sending the configured data to the host.

In one embodiment, the header information can comprise "RIFF" chunk, fmt chunk, and data chunk.

In one embodiment, address in a disc for requested track data can be calculated through READ CD ATAPI command and stored.

Accordingly, an optical disc drive can be used for an AV device with an USB input in addition to PC.

Also, data requested by a host are searched quickly and sent to the host.

### BRIEF DESCRIPTION OF THE DRAWINGS

The accompany drawings, which are included to provide a further understanding of this document and are incorporated on and constitute a part of this specification illustrate embodiments of this document and together with the description serve to explain the principles of this document.
FIG. 1 illustrates structure of an optical disc drive to which the present invention is applied;
FIG. 2 illustrates the overall flow diagram of the present invention;
FIG. 3 is a flow diagram illustrating a method for checking a file system of an optical disc;
FIG. 4 illustrates disposition of data according to ISO9660 file system and a process of collecting directory/file information;
FIG. 5 illustrates disposition of data according to UDF file system and a process of collecting directory/file information;
FIG. 6 illustrates structure of a FAT32 file system;
FIG. 7 illustrates a partition entry included in an MBR block;
FIG. 8 illustrates a boot parameter block included in a boot sector;
FIG. 9 illustrates a method for managing directory and file information collected from ISO9660 file system through a queue to convert the information to FAT32 file system according to one embodiment of the present invention;
FIG. 10 illustrates a method for managing directory and file information collected from UDF file system through a queue to convert the information to FAT32 file system according to one embodiment of the present invention;
FIG. 11 illustrates memory structure assigned to convert file information into FAT32 file system and generated FAT32 file system structure;
FIG. 12 is one embodiment of the present invention illustrating sector structure when actual data of a file immediately ensues within a file entry of immediate AD type and application of zero-padding when data are accumulated in a transfer buffer;
FIG. 13 illustrates a file entry and part of an extended file entry in UDF file system;
FIG. 14 illustrates an example where information about a parent directory and a own directory is generated in a directory;
FIG. 15 illustrates a process of changing an audio CD track into a wave file;
FIG. 16 illustrates a process of sending data to a host by preparing the data based on an address for which the host requested for access;
FIG. 17 illustrates a specific method for generating FAT table data;
FIG. 18 is a flow diagram illustrating a method for sorting file information based on start addresses of files;
FIG. 19 illustrates an example where search time is reduced when file information is searched for based on file information arranged in terms of start addresses compared with the case of searching for file information based on randomly arranged file information;
FIG. 20 illustrates an example of reporting by changing a field value of "Subclass code" to "0x06" among report data about "Get Descriptor Configuration Command".

### DESCRIPTION OF THE EMBODIMENTS

In what follows, an embodiment of a method for sending data in an optical disc drive capable of changing mode according to the present invention will be described in detail with reference to appended drawings.

Except for DVD-RAM, data are recorded in an optical disc according to ISO9660 or UDF (Universal Disk Format) specifications, which are different from the file system supported by computer OS (Operating System). Due to this reason, OS or some program (e. g., Nero) executed in the OS accesses the disc and record or read out data to and from the disc. In other words, file format change of a disc is carried out by a connected computer rather than an optical disc drive.

However, ordinary A/V devices with USB inputs other than computers equipped with OS or programs executed in the OS employ FAT32 file system and do not provide a function of transforming a file system of data; accordingly, even if an A/V device is connected to an external optical disc drive through USB, the A/V device cannot access the data recorded in an optical disc according to a different file system.

An optical disc drive according to the present invention, to allow a connected AV device (host) to access data recorded in a disc, can convert a file system of data recorded in the disc into a file system used by the host, e.g., FAT32 and send the converted data to the host.

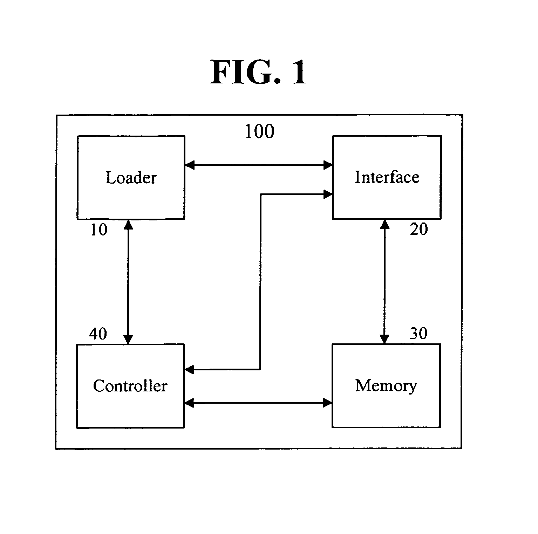

FIG. 1 illustrates structure of an optical disc drive to which the present invention is applied.

An optical disc drive 100 according to the present invention comprises a loader 10 for driving an optical pick-up, a spindle motor, a sled motor, and so on for recording or reading out data to and from an optical disc; an interface 20 for connecting to an external device, a memory 30 for storing data temporarily; and a controller 50 for controlling each element, determining operation mode, changing operation mode, and transforming a file system.

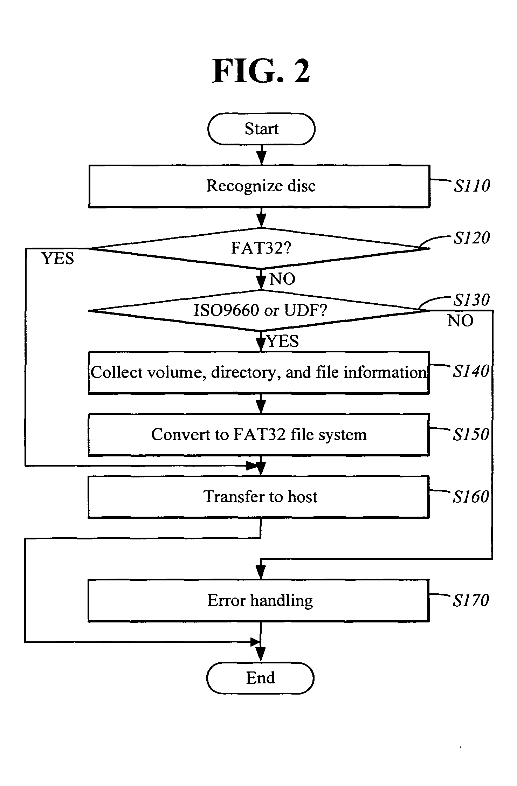

First, an overall flow of the present invention is described; FIG. 2 illustrates an operational flow diagram.

If a disc is newly loaded or power is supplied to an optical disc drive or the optical disc drive is reset while an optical disc is loaded, the controller 40 recognizes an optical disc and checks the file system of recorded data S110 by controlling the loader 10; if the file system of the optical disc is not FAT 32 (NO at S120 step), it is further checked whether the file system is ISO9660 or UDF S130.

The controller 40, if the file system is neither ISO9660 nor UDF (NO at S130 step), terminates a current process through error handling 170; if the file system is ISO9660 or UDF (YES at S130 step), the controller 40 collects S140 file system information of volume, directory, file information, and the like of the corresponding file system and converts the file system into FAT32 file system by using the collected information S150. Afterwards, according to a request of the host connected through the interface 30, the controller 40 sends file the system information and data converted according to FAT32 to the host S160.

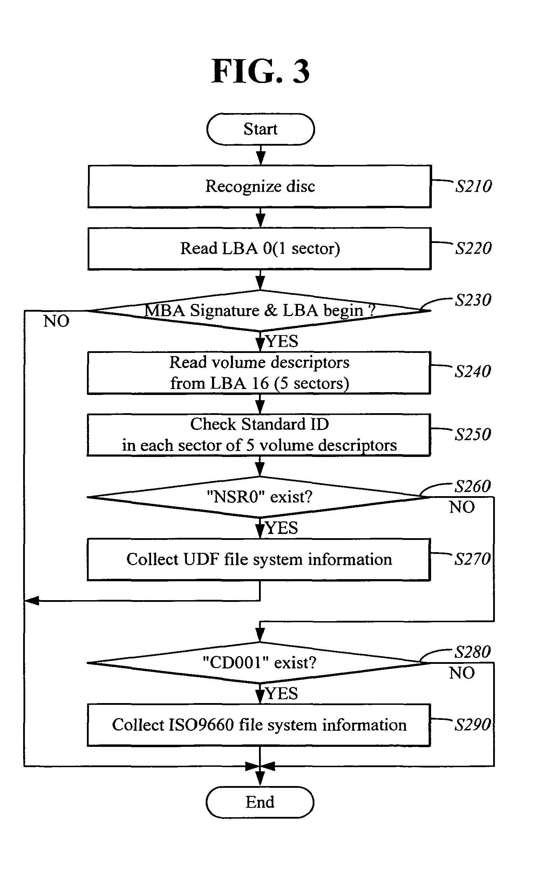

Next, a method for checking a file system of an optical disc corresponding to S110 to S130 steps from a flow diagram of FIG. 2 will be described. FIG. 3 is a flow diagram illustrating a method for checking a file system of an optical disc.

First, the controller 40, by controlling the loader 10, recognizes a disc including a disc type, namely CD/DVD/BD, the number of layers, and read-write characteristics such as read-only disc/write-once disc/rewritable disc S210; and read LBA (Logical Block Address) 0 of the disc S220.

The controller 40 checks whether MBR (Master Boot Record) signature exists in the sector read and whether LBA begin value exists in a first partition entry S230; if so (YEST at S230 step), the controller 40 determines that the file system of the corresponding disc is FAT32 and terminates.

The controller 40, otherwise (NO at S230 step), reads S240 volume descriptors at 5 sector from LBA 16 and checks a standard identifier (ID) inside each sector of the volume descriptors S250. Among standard IDs checked, if "NSR0" (Non-Sequential Recording) is found to exist (YES at S260 step), the controller 40 determine the file system of the optical disc to be UDF and collects information according to UDF file system S270.

The controller 40, if "NSR0" does not exist (NO at S260 step), checks whether one or more "CD001" exists among standard IDs S280; if "CD001" exists (YES at S280 step), the controller 40 determines the file system of an optical disc is ISO9660 and collects data according to ISO9660 file system S290. If "CD001" does not exist (NO at S280 step), the controller 40 terminates a current process by considering the non-existence of "CD001" to be an error.

Next, a method for obtaining file system information from each file system will be described.

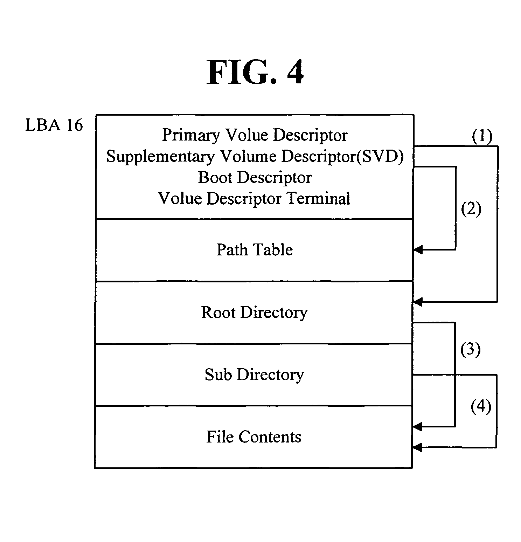

FIG. 4 illustrates disposition of data according to ISO9660 file system and a process of collecting directory/file information.
(1) Recording date/time information for a root directory and volume recording data & time information are collected from supplementary volume descriptor (SVD); and obtained is position at which specific information about the root directory can be found.
(2) Position of a path table is obtained from the SVD, which is optional.
(3) Specific information about the root directory is collected. ID and recording time for a sub-directory within the root directory are collected; obtained is position at which specific information about sub-directories can be found; and collected are an actual data start position, a file size, a file property, a recording time, and file ID about files belonging to the root directory.
(4) Collection of specific information about sub-directories is carried out the same as (3).

Based on information collected through (3) and (4) process, information needed for FAT32 file system (FAT table and root/directory information) can be generated.

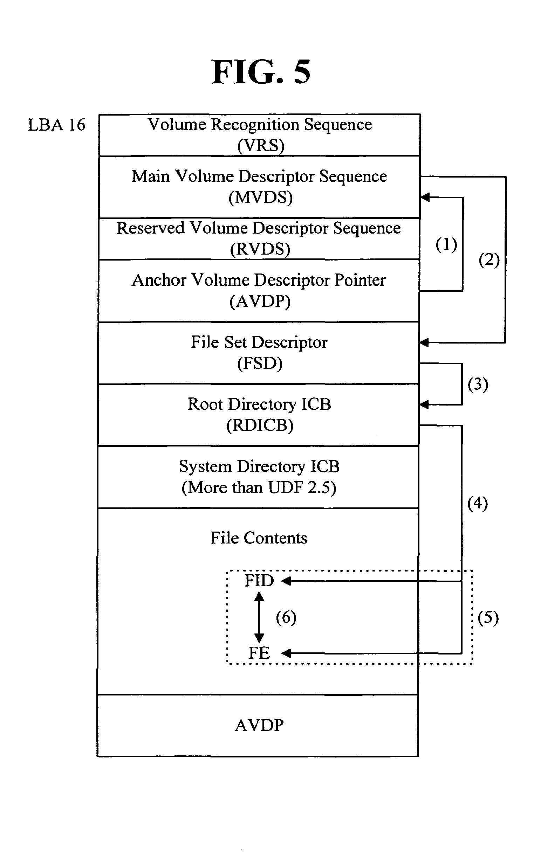

FIG. 5 illustrates disposition of data according to UDF file system and a process of collecting directory/file information.

In an UDF file system, file data are accessed in the order of AVDP (Anchor Volume Descriptor Pointer) -> VDS (Volume Descriptor Sequence) -> FSD (File Set Descriptor) -> file entry (FE) of a root directory -> information control block (ICB) of the root directory -> file identifier descriptor (FID) within the root directory -> ICB of a file -> data.
(1) Position of MVDS is obtained from AVDP by reading LBA 256.
(2) Information is obtained from each of volume descriptor sequence within MVDS. Recording date/time information of the corresponding volume is obtained from PVD (Primary Volume Descriptor); UDF revision information is obtained from IUVD (Implementation Use Volume Descriptor), which is intended for reading file information differently according to UDF revision. Also, partition start information is obtained from PD (Partition Descriptor).

Start information of FSD, LVID (Logical Volume Integrity Descriptor) position information, and partition map information are obtained from LVD (Logical Volume Descriptor); LVID is intended for checking the number of total directories and files while partition map information is for reading file information differently according to partition type.
(3) Position information of root directory ICB (RDICB) is obtained from FSD.
(4) While reading RDICB (File Entry), recording date/time information of the root directory are obtained from RDICB; file type and flag information are collected; and obtained is position information indicating the place where ID information about files (FID) within the root directory is recorded.
(5) By reading FID information about files within the root directory, obtained is position information indicating the place where a file entry (FE) about sub-directories and files within the root directory is recorded; collected are file name information and characters about sub-directories and files within the root directory.
(6) By reading FE about each file within the root directory, obtained are type, flag, recording time, revision time, and access time information of the corresponding file; checked is the type of AD (Allocation Descriptor) within the FE; and based on the checking result, obtained are actual data start position of a file and file size information.

Information collected through (3) to (6) processes is converted into FAT32 file system information.

Next, FAT32 will be described.

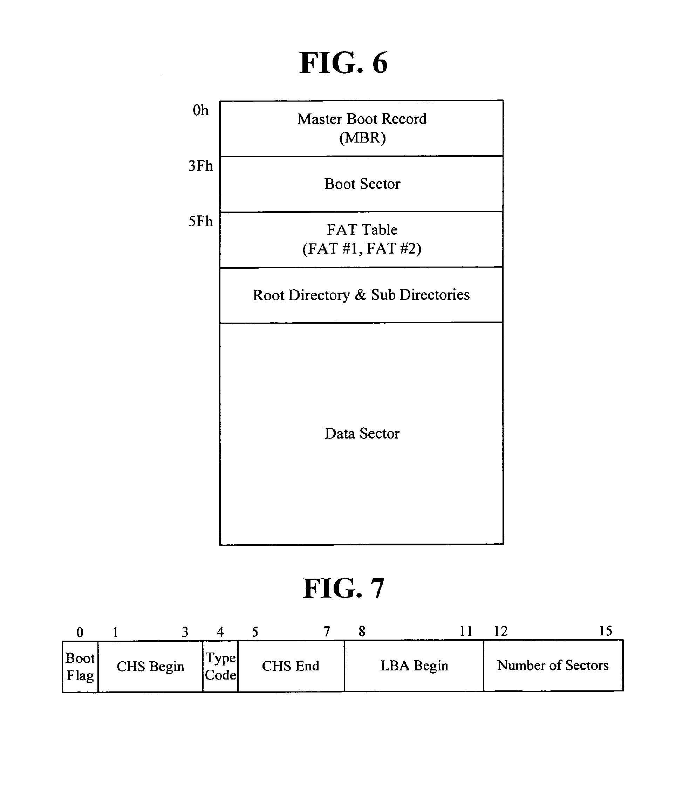

As shown in FIG. 6, a FAT32 file system comprises a master boot record (MBR); a boot record; a FAT table; root directory and sub-directory information; and data sector where actual data are recorded.

When a host accesses a storage medium of FAT32 file system, MBR sector is read first; and position information and size information of a boot sector (BS) and boot sector parameter information (BSPI) are obtained. Then it is checked whether the corresponding file system is FAT16 or FAT32 by reading BS and BSPI and obtained are elements for calculating a sector size manipulated by a cluster, recording date/time information of a volume, position and size of a FAT table, and position of the first data sector. Next, based on the elements, the host checks directories and files recorded in a storage medium. The host then obtains FAT tables and requires data by issuing a read command for required directories or files.

Next, described will be a method for generating FAT32 file system information based on information of directories and files collected from ISO9660 or UDF file system of an optical disc.

Information collected about directories and files are used when information about existence of the corresponding directories and files, actual recording position and file size are reported to a host; the information should be generated to comply with FAT32 file system specifications.

As described below, information is newly generated according to the format specified by FAT32 file system or collected information about directories and files is converted.

MBR block and boot parameter block within a boot sector not defined in the ISO9660/UDF file system are generated and sent immediately upon the request of the host.

FIG. 7 illustrates a partition entry included in the MBR block; among 64 bytes of four partition entries, the first partition entry of 16 bytes is composed as shown in FIG. 7 and the remaining three partition entries are treated as blank entries.

A partition entry, in the order of appearance from the head, comprises a boot flag of one byte, CHS (Cylinder/Head/Sector) Begin sector of three bytes, type code of one byte, CHS end sector of three bytes, LBA Begin sector of four bytes, and partition size (number of sectors) of four bytes. The LBA Begin is set to be 0x3F while the number of sectors is set to be 0x44424h as a default value. If size of data recorded in a disc exceeds the number of sectors, the number of sectors is determined to reflect the actual capacity of the disc.

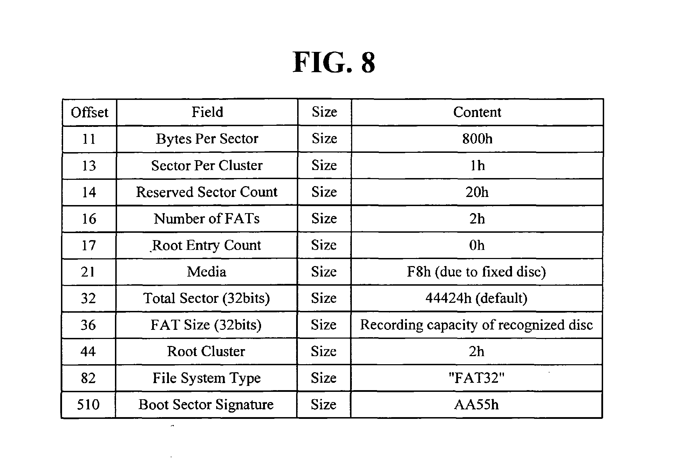

FIG. 8 illustrates a boot parameter block included in a boot sector.

In FIG. 8, the number of bytes processed per each sector (Bytes Per Sector) is 2048 byte; the number of sectors of one cluster processed by a FAT table (Sectors Per Cluster) is determined by taking account of the sector size processed by CD/DVD to set up one sector. The FAT table size (FAT size) is determined to accommodate a current recording capacity of a disc recognized by an optical disc drive; one unit (32 bit) within FAT table corresponds to one sector, namely, about 2 MB. The recording capacity of a disc can be obtained by using physical format information or disc information recorded in a lead-in area of the disc irrespective of a file system applied to the data recorded in the disc.

Also, among 512 bytes of a boot sector, last two bytes are set to be "AA55h" for a boot sector signature.

As for the information of directories and files collected through the processes of FIGS. 4 and 5, the number of total directories and files to be converted is limited according to the space available in the memory 30 of a current optical disc drive 30. Although a large number of directories and files can exist since there is no limit on the total number of directories and files within a maximum capacity of a disc currently recognized, capacity of the memory 30 employed for converting all of related information is limited.

To alleviate the situation above and thus to convert information of a lot more number of directories and files, the present invention manages the memory 30 in such a way to collect and convert information about directories and files for conversion through queuing. Detailed description of the above will be given below.

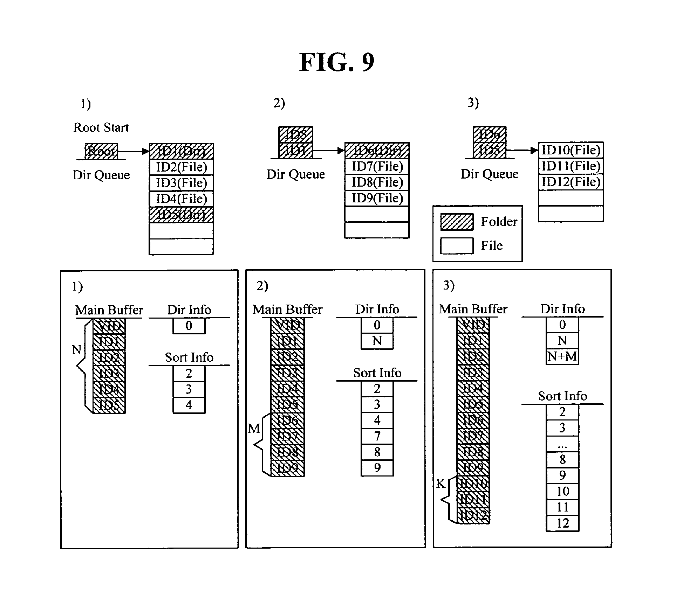

FIG. 9 illustrates an embodiment of managing directory and file information collected from ISO9660 file system through a queue to convert the information to FAT32 file system.

In the case of ISO9660, when information of each directory is read, information about each file included in the corresponding directory can be directly converted to file system information according to FAT32.

Directory information excluding files from a file list within a directory is stored in a queue; directory information is updated according to FAT32 file system information as it is removed from the queue one by one. Since queues are employed, when analysis of directories in the same hierarchy is completed, the same process is applied to the next lower hierarchy.
1) For the first time, a root directory is put in a Dir queue. The root which is the first item put in the Dir queue is processed. When the root is processed, ID1 and ID5 are put in the Dir queue since they are directories.

Information about ID1 to ID5 (start address, size, name, property, length of file name, time information, etc. of each file/directory) is converted to file system information compliant with FAT 32 and stored in the main buffer area of the memory 30. Position (0) at which information about the root (information converted to FAT32 regarding ID1 to ID5, which are directories and files included in the root) starts in the main buffer area or a pointer indicating the position is stored in the directory information (Dir Info) area of the memory. Start position and size information of each file (ID2∼ID4) are stored in the sort information (Sort Info) area of the memory 30.

Start address of each file or directory can be converted to the sum of size of MBR and the boot sector; FAT table size; and size of root/sub-directory information, namely, a value moved backward more than the space occupied by FAT32 file system information to be converted or the sum of the original start address recorded in the optical disc and size of FAT32 file system information to be converted (file system offset). When actual data are read out from the optical disc, data are read from the address requested from the host subtracted by the file system offset which corresponds to the size of FAT32 file system information converted.
2) In the Dir queue, ID1 and ID5 are piled up and ID1 which entered the queue first is processed. Since ID6 (directory) and ID7∼9 (file) belong to the ID1 directory, ID6 is put in the Dir queue in the same way as 1); information about ID6 ∼ ID9 belonging to ID1 is converted to FAT32 file system information and thus stored in the main buffer area of the memory 30. Position (N) at which information about directory ID1 (information converted to FAT32 about files/directories included in ID1) starts in the main buffer area is stored in the directory information area of the memory 30; and start position and size information of each file (ID7∼ID9) included in the ID1 are stored in the sort information area of the memory 30.
3) In the Dir queue, ID5 and ID6 are piled up and ID5 which entered the queue the earlier is processed. ID5 is processed similar to 1) and 2) process; since directory ID5 does not include a sub-directory but files (ID10∼ID12) only, information about ID10∼ID12 is converted to FAT32 and thus stored in the main buffer area of the memory 30. Position (N+M) at which information converted to FAT32 regarding the directory ID5 starts in the main buffer area is stored in the directory information area of the memory 30. Start position and size information of each file (ID10∼ID12) included in ID5 are stored in the sort information area of the memory 30.

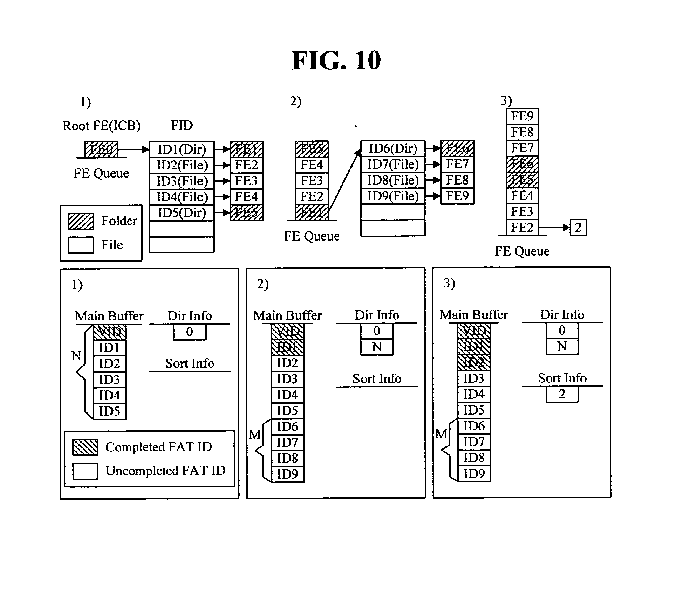

FIG. 10 illustrates an embodiment of managing directory and file information collected from UDF file system through a queue to convert the information to FAT32 file system.

In the case of UDF file system, all the information required for FAT32 conversion is not available while reading a file identifier (FID). FAT32 file system information can be completed by additionally obtaining information such as file position only if the information is collected up to the file entry (FE).

Different from ISO9660 which demands a queue for directories, in the case of UDF file system a queue for a file entry is generated; operation on all the FEs are put in the queue; and the operation is processed in the order of entrance to the queue, namely FIFO (First Input First Output) mechanism.
1) First of all, information (start position, size, etc.) about a root file entry (Root FE) is accumulated in the queue. Since the first data into the queue is Root FE, by analyzing FID about the root FE, FE1∼FE5 about files/directories included in the root are all accumulated in the queue.

In the case of ID1∼ID5 excluding volume ID (VID) in the main buffer area, each entry of file system information to be converted to FAT32 is completed once the file entry (FE) about the ID1∼ID5 is read; therefore, FAT32 entry about ID1∼5 in the current step is not completed yet.

In the directory information area, position (0) information at which information about the root (information about files/directories included in the root, which is to be converted to FAT32 file system) starts in the main buffer area is stored.

Since information about FE of files or directories is not available yet, no data is accumulated in the sort information area.
2) FE1 which is the first file entry of FE queue is taken out and processed.

At this time, since FE1 points out FID, by analyzing FID, operation details about each FE6∼FE9 included in the ID1 folder are accumulated in the FE queue.

Since FE1 is analyzed, completion of FAT32 entry about ID1 corresponding to FE1 can be possible.

Since position (N) at which the information about ID1 (information entry converted to FAT32 about files and directories included in ID1)---a second directory---starts in the main buffer area can be known, N is added to the directory information area.

Since no information about a file FE is available yet, no data is accumulated in the sort information area.
3) FE2 which is the next file entry is taken out from the FE queue and processed.

Since FE2 is a file, an entry corresponding to ID2 in the main buffer area is completed.

Start position and size information of a file, which are file information corresponding to ID2 in the sort information area, are stored.
2) or 3) operation is repeated for a file entry accumulated in the FE queue.

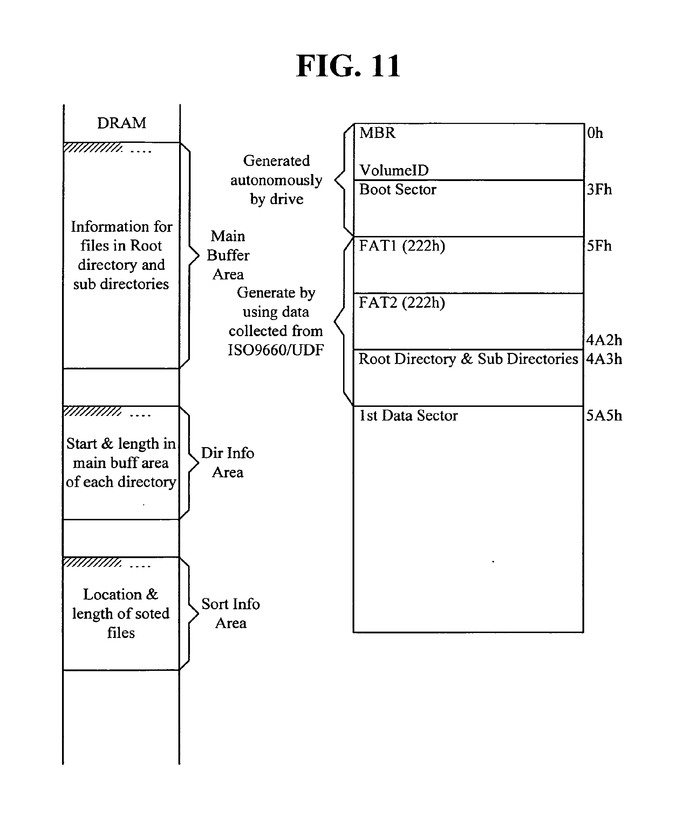

FIG. 11 illustrates memory structure assigned to convert file information into FAT32 file system and generated FAT32 file system structure. Contents for MBR and a boot sector can be generated autonomously by an optical disc drive by using only disc information of an optical disc without analysis of the file system of the optical disc. Contents of FAT table, a root directory, and sub-directories are collected through the process of FIG. 9 or FIG. 10 and can be generated based on the information stored in the main buffer area, the directory information area, or the sort information area of the memory 30.

Meanwhile, if type of AD (Allocation Descriptor) within the file entry (FE) in the UDF file system is "Immediate", the corresponding file entry should be handled exceptionally from the other file entries.

Immediate AD is a descriptor indicating whether information about the corresponding file and actual data of the corresponding file are all included within one sector of a file entry about a particular file. For the sake of description, it is assumed that handling of Immediate AD is allowed only for small-sized files which are 2MB or below.

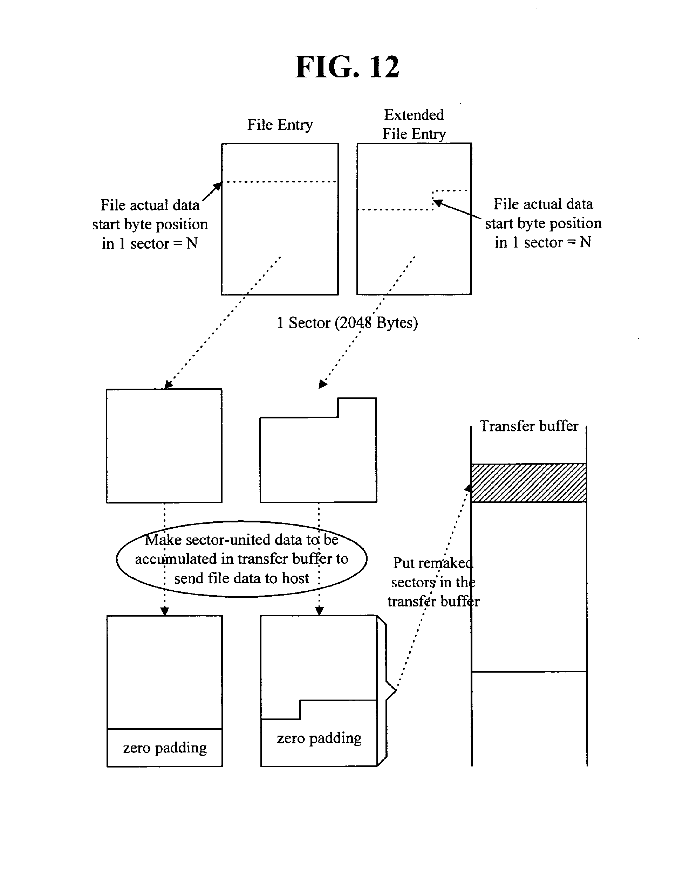

FIG. 12 shows structure of one sector when actual data of a file immediately follows in the form of Immediate AD within the file entry.

Since byte position at which actual data of a file within one sector starts can vary according to a length field value of extended attributes within the file entry, the byte position should be calculated based on the corresponding field value.

If information about a file is recorded in the form of Immediate AD while collecting information of UDF file system, start position of the corresponding file is separately stored in an area for Immediate AD within the memory 30; if an address requested for reading from a host indicates the place where a file of Immediate AD type is recorded, the corresponding one sector is read again and byte position from which actual data begin is checked. Raw data are read from the byte position checked and are reconfigured in a transfer buffer in the form of return data in units of one sector and thus sent to the host.

Also, at the time of generating a new one sector by accumulating data in the transfer buffer, as shown in FIG. 12, start position N of actual data is disposed being shifted to the first byte position 0 of the new one sector; and the remaining bytes of the corresponding one sector are padded with zeros and thus sent.

Next, described will be the case where the file size from among file information extracted from the UDF file system is zero ('0').

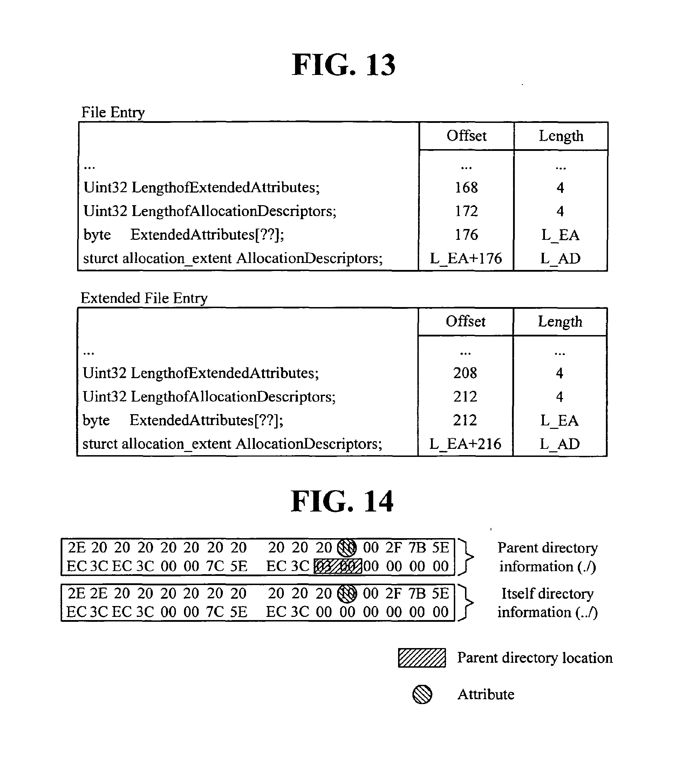

File entry (FE) or extended file entry (EFE) keeps total length of allocation descriptors included in the corresponding FE (or EFE) in 172∼175th byte (length of allocation descriptor) and 212∼215th byte respectively; FIG. 13 illustrates part of the file entry and the extended file entry.

Meanwhile, among built-in recording tools of Windows OS, some recording tool records even the value of "length of allocation descriptor" within FE (or EFE) as "0x00000000" when size of the recorded file is '0'. In this case, the present invention, at the time of collecting and analyzing information of directories and files from UDF file system, extracts information of the corresponding file and stores the extracted information in the sort information area of the memory 30 even if AD exists and its size is '0'. When a host requests, data about the corresponding file is included in the FAT table and thus generated.

Although actual data are not involved in the above case, the process above is employed since it is important to accurately convert information of a file recorded in a currently loaded disc into the FAT32 file system and it should be guaranteed that all the files are copied normally when directories and/or files are to be copied in the PC environment.

Next, described will be a method for processing when the main buffer area of the memory where file and directory information area are stored for conversion into FAT32 file system does not have space for storing further data.

In the structure of DRAM memory for conversion to FAT32 file system of FIG. 11, though files or directories for conversion exist, if a main buffer area in which file system information finally converted to FAT32 is full of data, accommodating no further information converted---for example, the number of files or directories with small or intermediate size is very big---those directories not converted yet are processed as follows.
1) The controller 40 checks the number of total directories and files by analyzing file system of an inserted disc, converts each directory and file into FAT32 file system information and stores the converted directory and file in the main buffer area of the memory 30, and stores a pointer with a predetermined size (e.g., 32 bit) in the directory information area, the pointer indicating a position at which converted information about each directory is located within the main buffer area.

If the main buffer area has no further space available, for each remaining directory not converted, 32 bytes of information about parent directory and another 32 bytes of information about itself directory of the corresponding directory are generated as shown in FIG. 14; the two 32 bytes of generated information are stored in a preliminary area not used for any purpose by temporarily assigning 64 bytes for the preliminary area; "00" data or data of a predetermined pattern are recorded in the directory information area for those directories stored in the preliminary area.

For example, if only (N-3) x 32 bits includes meaningful data pointing a predetermined position within the main buffer area and only "00" data or data with a predetermined pattern are recorded from (N-2) x 32 bits in the directory information area although the number of total directories is N, the main buffer area of the memory is full for accommodating (N-2)-th, (N-1)-th, and N-th directory; therefore, it can be determined that information about directories subsequent to the (N-2)-th directory is recorded in the preliminary area sequentially every 64 bytes.

For reference, since each directory always has to carry information about its parent and itself, hierarchical structure of each directory can be checked based on the information.
2) When information about an arbitrary directory is requested from the host, if "00" or data of a predetermined pattern is recorded at a pointer indicating the position in the main buffer area including converted data about a requested directory, information about the requested directory is read from the preliminary area of the memory 30 and reported to the host.
3) Empty directories without sub-directories and files are also reported to the host through 1) and 2) process.

Next, described will be a method for processing when an audio CD is recognized by an optical disc drive.

In the present invention, to allow playing tracks of an audio CD even in a household appliance or a portable device not capable of playing an audio CD track, when an audio CD is recognized, each audio track is reconfigured by "track #.wav" file and finally generates FAT32 file system information.

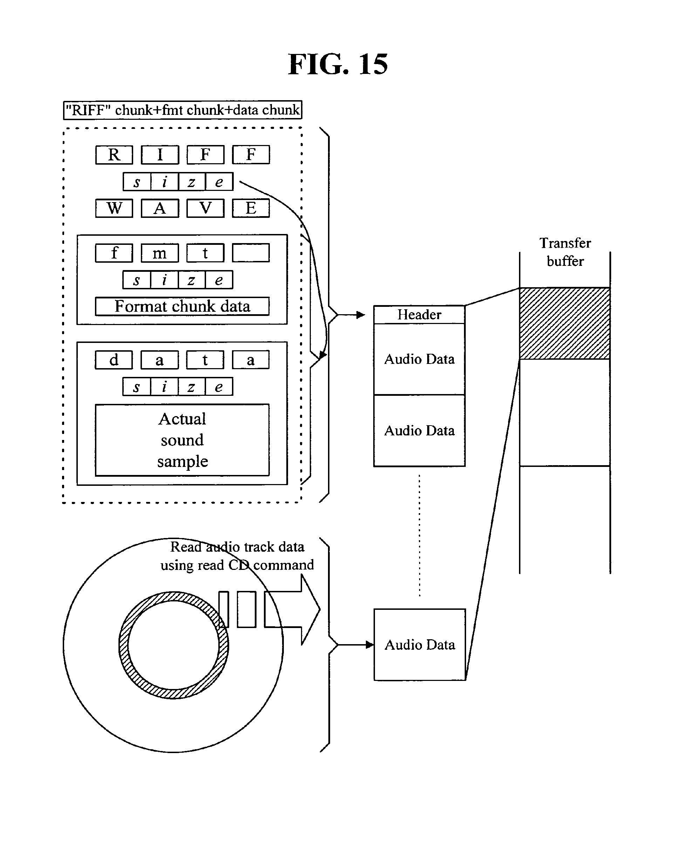

FIG. 15 illustrates a process of changing an audio CD track into a wave file.

To implement the above process, the number of total tracks within the audio CD recognized and start address of each track are stored inside a drive; and based on start position information and size information of each track, FAT32 file system information is generated, taking such structure to have as many "track #.wav" files as the number of tracks in the root directory.

After completion of converting to FAT32 file system, when access is attempted to each file from a host system, the following operation is carried out.
1) If a wave file play request is issued from a host system, the optical disc drive internally checks read start address and calculates address within the disc about data of actual audio tracks through READ CD ATAPI command and stores the calculated address.
2) Since the audio track requested for reading has been reported to the host in the form of wave file, the following process is carried out first of all to newly configure audio track data in the form of wave files.
   a) "RIFF" chunk, fmt chunk, and data chunk intended for header of a wave file are generated and a file header is made for each track.
   b) An optical disc drive reads audio track data requested for reading internally through the READ CD command and stores the audio track data temporarily in the memory.
   c) To accumulate the header data of a wave file generated through a) process and audio data read through the b) process in a buffer for transfer, the header data and the audio data are arranged in units of sectors.
3) If a read request for one track is fulfilled and a read request for the next track is applied, a host system is reported as the corresponding header data and audio data are accumulated through repetition from a) to c) of 2) process.

If information about directories and files collected from ISO9660/UDF file system is completely converted to FAT32 file system, the optical disc drive again attempts access to the host system; the host system attempts access to obtain information about a connected device (optical disc drive).

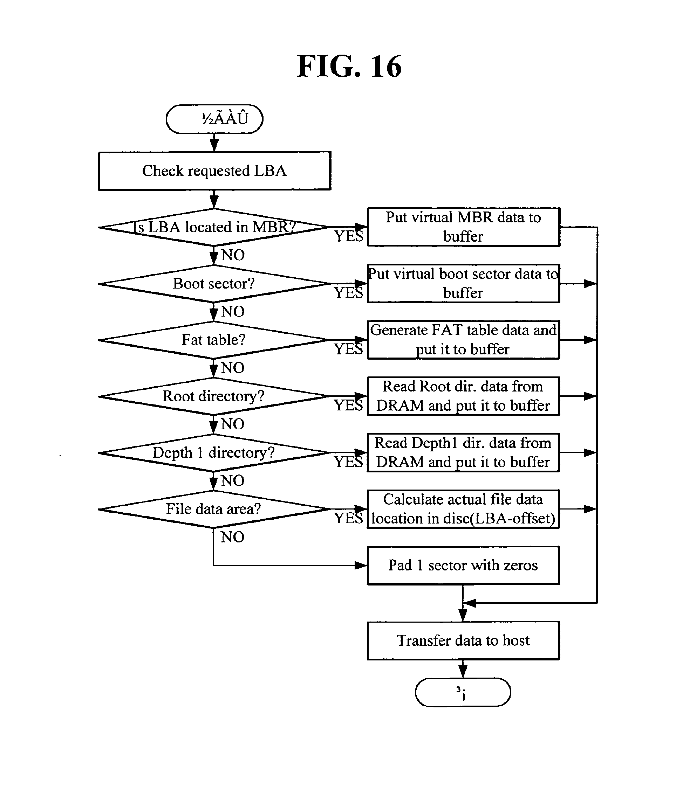

The optical disc drive, based on an address requested for reading from a host system, reports file system information corresponding to the address requested to the host system; FIG. 16 illustrates a process of sending data to a host by preparing the data based on an address requested in response to the access of the host.

If LBA requested by the host belongs to MBR or a boot sector, the optical disc drive puts data generated by itself into a transfer buffer and sends the generated data to the host.

If the host requests information of directories and files inside a device (root directory/sub-directory information), the optical disc drive reports requested data based on the data generated by newly converting the information in the main buffer area and in the directory information area within the memory 30.

If the host requests actual file data inside a device, based on the information about directories and files stored in the main buffer area and the sort information area within the memory 30, an address is calculated, the address corresponding to the address requested by the host and holding actual data in the device. Data are read out from the calculated address and sent to the host, where the data are read out from an address obtained by subtracting the file system offset corresponding to the size of the file system information converted to FAT32 from the address requested by the host subtracted by.

If the host requests a FAT table, based on the information about directories and files stored in the directory information area and the sort information area, FAT table data to be recorded at the requested address are generated and sent to the host, which will be described below.

Size of FAT table increases according to the amount of data recorded in a medium (the number of sectors recorded in the data area); therefore, when the file system of an optical disc is converted into FAT32, FAT tables cannot be all stored in the memory 30 and according to the host's request, FAT tables have to be newly generated and sent.

FAT table provides the same role as a bitmap about addresses at which directories and files are recorded in a disc; each unit within the FAT table is 32 bits (1 DWORD); in the present invention, by employing the conventional sector unit for an optical disc, 1 DWORD represents a single sector.

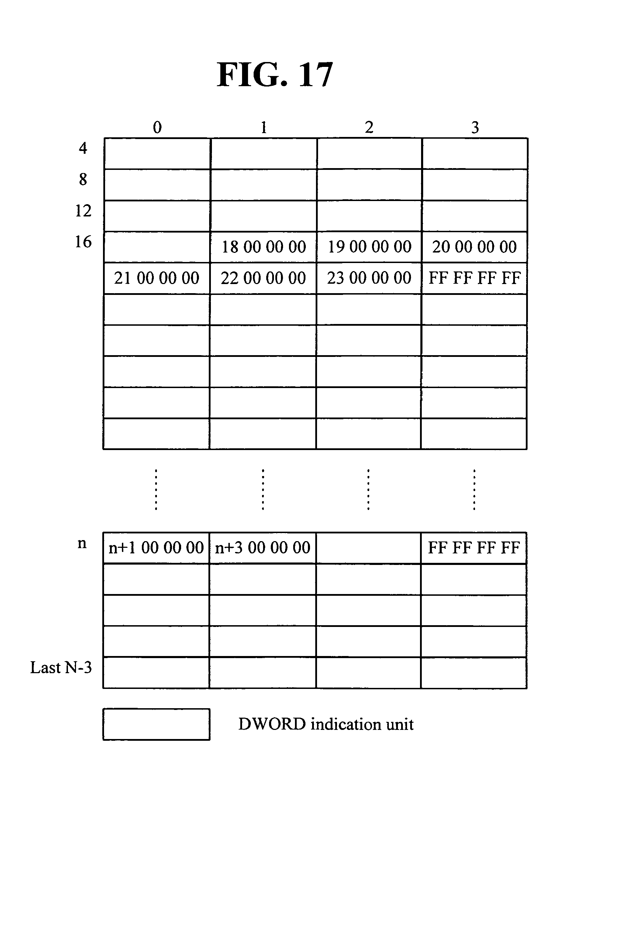

FIG. 17 illustrates a specific method for generating FAT table data.

For example, if it is assumed that File #1 is recorded being distributed for clusters 17, 18, 19, 20, 21, 22, 23, 24 while File #2 for clusters n, n+1, n+3, address of each file in the FAT table starts from the 17-th and n-th FAT unit. Each unit represents the number of the next sector and 0x0FFFFFFF is inserted in the last unit of the sector occupied by the corresponding file. For those units where data are not recorded, 0x00000000 is inserted.

For an optical disc drive to read and send data promptly in response to a request for reading actual data from a host, it is advantageous to apply a process of sorting beforehand when collecting information about directories and files from ISO9660/UDF file system.

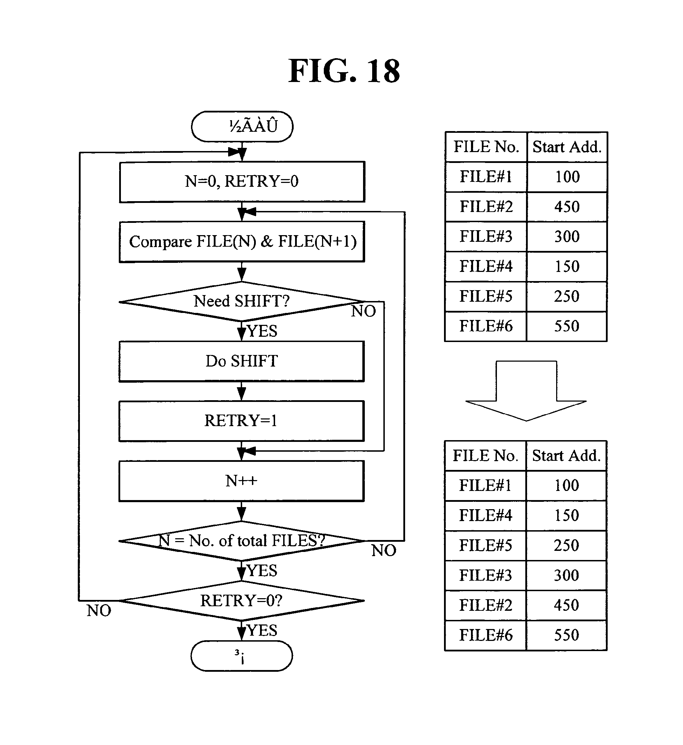

As described from FIGS 9 to 11, start position and length information of each directory from among information collected to convert to FAT32 file system are stored in the directory information area within the memory 30; start position and size of each file are collected for all the files and are arranged in the ascending order by using a method shown in FIG. 18 (by comparing start addresses of two neighboring files from the file information arranged in a random order and changing the order of file information in the ascending order) and are stored in the sort information area within the memory 30.

After reading and sending file data requested from the host for the first time through the file information (position and size) arranged in the ascending order, without the needs to search the entire sort information area, by comparing a current read address with a previous read address remembered, information about destination address can be found quickly by searching only the adjacent area up and down the memory point at which information for the current address is indicated. By analyzing the trend of read request addresses of a host statistically, the search range can be determined after the first reading.

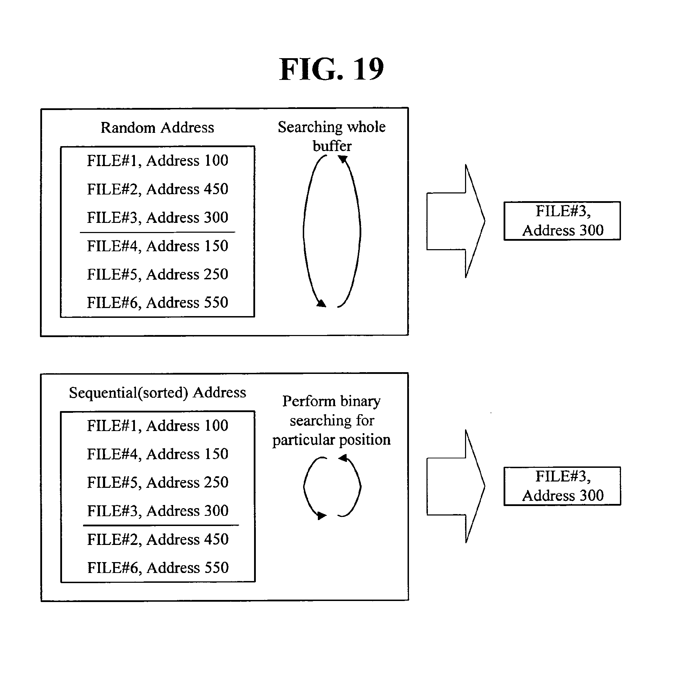

FIG. 19 illustrates an example where search time is reduced when file information is searched for based on file information arranged in terms of start addresses compared with the case of searching for file information based on randomly arranged file information.

Meanwhile, for a particular device, only converting file system into FAT32 and sending the converted file system do not guarantee playing of contents normally recorded in a disc; photo frames are a good example.

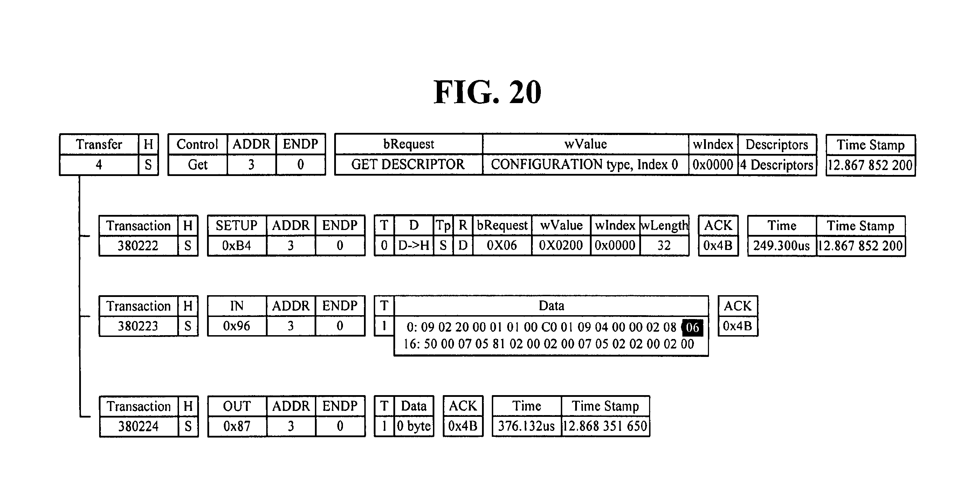

To improve compatibility between devices above, in the present invention, in the report data about "Get Descriptor Configuration Command" issued after a device such as the photo frame recognized an optical disc drive, the "Subclass code" field value can be set as "0x06" (SCSI Command) like an USB memory as shown in FIG. 20 and thus the data can be reported.

The preferred embodiments of the present invention described above have been introduced for the illustration purpose only; therefore, it should be understood by those skilled in the art that various other forms of embodiments allowing modification, change, substitution, or addition would be possible without leaving the technical principles and scope of the present invention defined by the appended claims.

## Claims

1. A method for converting data in an optical disc drive, comprising:
generating data corresponding to a first file system based on file system information collected with respect to data recorded in an optical disc and storing the generated data in a memory, first data converted according to the first file system for directories and files recorded in the optical disc, second data for the directories, and third data for the files being stored in the memory separately from each other; and
processing information requested from a host based on at least part of the separately stored data and sending the processed information to the host.

2. The method of claim 1, wherein the sending step checks the information requested by the host based on an address included in a command received from the host.

3. The method of any one preceding claim, wherein the first data includes at least one or more from among a start address, size, name, property, length of the name, and time information for each file or directory.

4. The method of any one preceding claim, wherein, if no space is available in the area where the first data are stored, data for a parent directory and data for itself directory are generated for a directory not converted into the first data, and are stored in a preliminary area of the memory.

5. The method of any one preceding claim, wherein the second data include a position from which converted data for each directory start within an area where the converted first data are stored.

6. The method of any one preceding claim, wherein the third data include start position and size information of actual data of each file.

7. The method of claim 6, wherein the third data are arranged in terms of the start position.

8. The method of claim 5, wherein the start position of the actual data is expressed by a sum of an original start address recorded in the disc and size of file system information generated during conversion into the first file system for the data recorded in the disc.

9. The method of claim 6, wherein a file system of the optical disc is UDF and for a file keeping an allocation description in a file entry and being of zero size, start position and size information of actual data of the corresponding file are recorded as the third data.

10. The method of any one preceding claim, wherein the sending step, upon request of information about a root or a directory from the host, sends requested data selectively from the first data with reference to the second data.

11. The method of any one preceding claim, wherein the sending step, upon request of information about arranged addresses for file data or directory data from the host, generates requested information based on the first to third data and sends the generated information.

12. The method of any one preceding claim, wherein the sending step, upon request of MBR or a boot sector of FAT32 from the host, independently of a file system of data recorded in the optical disc, generates the MBR or the boot sector and send the generated MBR or boot sector.

13. The method of claim 12, wherein information related to recording capacity of a disc to be included in the MBR or the boot sector is obtained from disc information or physical format information read out from a lead-in area of the optical disc.

14. The method of any one preceding claim, wherein part of the file system information collected to generate data corresponding to the first file system is managed through a queue.

15. The method of claim 14, wherein directory information or file entry information from among the collected file system information is stored in a queue; and information stored in the queue is processed in an order of storing in the queue.

16. The method of any one preceding claim, wherein, if file system of the optical disc is UDF, for a file entry where type of allocation descriptor is immediate, start position of the corresponding file is stored separately in the memory as fourth data.

17. The method of claim 16, wherein the sending step, upon request of data for an address included in the fourth data from the host, includes reading out requested actual data from a sector indicated by the address, padding zeros in the read actual data, and reconfiguring the zero-padded data in units of sectors to transfer.

18. The method of any one preceding claim, wherein the sending step, if a "Get Descriptor Configuration Command" is sent from the host, sets a value of "Subclass code" field of report data to be "0x06" and thus sends the data to the host.

19. The method of any one preceding claim, wherein a file system of the optical disc is ISO9660 or UDF and the first file system is FAT32.

20. An optical disc drive, comprising:
a loader for reading out data from an optical disc or recording data in an optical disc;
an interface to be connected to a host;
memory for storing data; and
a controller configured to collect file system information about data recorded in an optical disc through the loader, to generate data corresponding to a first file system based on the collected information, to store the generated data in the memory, while storing first data converted according to the first file system for directories and files recorded in the optical disc, second data for the directories, and third data for the files in the memory separately from each other and, to process information requested from the host based on at least part of the separately stored data and to control the interface to send the processed information to the host.

21. A method for processing data of an audio CD in an optical disc drive, comprising:
based on a number of tracks recorded in the audio CD and start address and size information of each track, generating data corresponding to a first file for file structure along which as many wave files as the number of tracks are stored;
if a predetermined file from among the wave files is requested to play from a host receiving data generated according to the first file system, generating header information of the corresponding file and reading out track data for the corresponding file and storing the track data in the memory temporarily; and
configuring the header information and track data in units of sectors and sending the configured data to the host.

22. The method of claim 21, wherein the header information comprises "RIFF" chunk, fmt chunk, and data chunk.

23. The method of claim 21, further comprising:
calculating address in a disc for requested track data through READ CD ATAPI command and store the calculated address.
